# FASCICULE DE BREVET EUROPEEN

(11) **EP 2 053 553 B1**
(45) Date de publication et mention de la délivrance du brevet: **30.03.2022**
(21) Numéro de dépôt: 08290978.9
(22) Date de dépôt: 17.10.2008
(51) Int. Cl.: G06Q 20/00

(54) **Procédé et dispositif pour l'échange de valeurs entre entités électroniques portables personnelles**
Verfahren und Vorrichtung zum Austausch von Werten zwischen persönlichen tragbaren elektronischen Einheiten
Method and device for exchanging values between portable personal electronic entities

(30) Priorité: 22.10.2007 FR 0758477
(43) Date de publication de la demande: 29.04.2009
(73) Titulaire: IDEMIA France, 92400 Courbevoie (FR)
(72) Inventeur: Delolme, Pierrick, F-75013 Paris (FR); Bertin, Marc, F-78720 La Celle Les Bordes (FR)
(74) Mandataire: Chauvin, Karen Laurence

(56) Documents cités:
- WO-A-2005/079038
- WO-A-2007/076456
- WO-A-2007/119032
- DE-A1-102004 046 847
- US-A1- 2007 123 215

## Description

La présente invention concerne l'échange de montants en valeurs, par exemple de valeurs monétaires, de points de fidélité, de bons d'achat ou d'abonnements, et plus particulièrement un procédé et un dispositif pour échanger des montants en valeurs entre entités électroniques portables, par exemple entre téléphones mobiles.

L'évolution des réseaux de communication, notamment Internet, a contribué au développement de nouveaux modes de distribution de biens et de services qui ont eux-mêmes entraîné la mise en œuvre de nouveaux moyens de paiement. Par exemple, le paiement à travers un réseau de communication, aussi appelé paiement en ligne, permet à un utilisateur, après avoir commandé un article ou un service, de fournir des informations bancaires, un montant et une autorisation à un tiers de confiance afin que celui-ci transmette une requête de transaction auprès du système informatique de l'établissement bancaire concerné.

Cependant, si les moyens de paiement entre plusieurs sociétés ou entre des individus et des sociétés ont été à l'origine de nombreux développements, peu de systèmes permettent un échange de montants en valeurs, simple et sécurisé, entre plusieurs individus.

Il existe d'une part des porte-monnaie électroniques permettant à un débiteur de verser une somme monétaire à un créditeur, le débiteur et le créditeur étant physiquement proches l'un de l'autre au moment de la transaction. Selon ces systèmes, une carte de paiement est capable de mémoriser un nombre représentant un montant monétaire. Cette carte peut être créditée, ou rechargée, à l'aide d'un dispositif adapté. Elle est débitée lors de chaque paiement. Ce mode de paiement ne met généralement pas en œuvre de mécanisme de vérification du consentement du titulaire de la carte par son authentification, il s'agit souvent d'un mode de paiement anonyme, comme un paiement en espèce. Cependant, un tel moyen de paiement ne peut être utilisé que pour de petites transactions. Par ailleurs, le créditeur doit disposer d'un dispositif adapté à la lecture de la carte, par contact ou sans contact, pour recevoir l'argent.

Il existe d'autre part des systèmes, tels que le système présenté dans la demande de brevet WO 03/023574, permettant à un débiteur de verser une somme monétaire à un créditeur, le débiteur et le créditeur n'étant pas nécessairement à proximité l'un de l'autre au moment de la transaction. Selon ces systèmes, un transfert monétaire peut être effectué entre deux individus pourvus d'entités électroniques telles que des téléphones mobiles. Les transactions sont ici réalisées par l'intermédiaire d'un système central dans lequel sont mémorisés les profils des utilisateurs. De tels profils permettent de mémoriser les informations bancaires des utilisateurs et d'effectuer les contrôles nécessaires. Cependant, une telle solution impose la saisie de l'identité du créditeur, ce qui peut s'avérer fastidieux.

La demande de brevet US 2007/0123215 décrit l'utilisation de fonctionnalités de réseaux personnels sans fil (WPAN) et de technologies d'identification sans fil dans des serveurs pour améliorer la sécurité de communication sans fil de données et permettre la mise en oeuvre de nouvelles applications. Connecté à un serveur d'authentification, un adaptateur réseau sans fil authentifie des utilisateurs et leur fournit l'accès à des données sécurisées. Un serveur de localisation indique les emplacements des utilisateurs et envoie des informations de localisation vers un serveur de contrôle centralisé et le serveur d'authentification.. Avec ces informations, le serveur de contrôle centralisé initie et optimise les processus d'échange d'informations et coordonne les fonctions des serveurs et des terminaux des utilisateurs pour permettre, en particulier, d'effectuer des transactions.

La demande de brevet DE 10 2004 046 847 vise un système pour effectuer des transactions via Internet en utilisant une carte à microcircuit comme moyen de signature. Ce système utilise un lecteur de carte relié à un ordinateur lui-même connecté à Internet. Les données sont reçues par un serveur et vérifiées. Un accusé réception est retourné et la transaction est effectuée lorsqu'une signature numérique est obtenue.

L'invention permet de résoudre au moins un des problèmes exposés précédemment.

L'invention a ainsi pour objet un dispositif électronique portable personnel pour permettre à un créditeur de procéder à un transfert d'un montant en valeurs, ce dispositif comprenant les moyens suivants,
- moyens de communication sans fil à faible portée ;
- moyens pour recevoir un message sécurisé d'une entité électronique portable personnelle d'un débiteur, ledit message sécurisé comprenant au moins une information d'authentification dudit débiteur et étant reçu via lesdits moyens de communication sans fil à faible portée ;
- moyens pour créer un message de transaction comprenant au moins une donnée liée audit montant en valeurs ; et,
- moyens pour transmettre ledit message de transaction.

Le dispositif selon l'invention permet ainsi de réaliser simplement une transaction de façon sécurisée à l'aide d'une entité électronique portable personnelle telle qu'un téléphone mobile, sans avoir recours à un dispositif spécifique tel qu'un terminal de paiement ni à un environnement particulier.

Ledit message sécurisé comprend en outre une référence audit débiteur, lesdits moyens pour recevoir un message sécurisé étant adaptés à transmettre ladite référence auxdits moyens pour créer un message de transaction, lesdits moyens pour créer un message de transaction étant adaptés à ajouter ladite référence audit message de transaction. Le message de transaction comprend une référence au débiteur pour permettre à un système informatique d'un tiers d'effectuer une opération de débit correspondant à la transaction.

Ledit message sécurisé comprend en outre ladite au moins une donnée liée audit montant en valeurs, lesdits moyens pour recevoir un message sécurisé étant adaptés à transmettre ladite au moins une donnée liée audit montant en valeurs auxdits moyens pour créer un message de transaction. Le dispositif selon l'invention permet ainsi à un débiteur de saisir ou de valider le montant de la transaction sur son entité électronique portable personnelle.

Le dispositif selon l'invention comprend en outre, de préférence, des moyens de saisie adaptés, par exemple, à saisir ladite au moins une donnée liée audit montant en valeurs. De tels moyens de saisie peuvent également être utilisés pour saisir une donnée permettant l'authentification dudit débiteur telle qu'un code personnel d'identification.

Lesdits moyens de communication sans fil à faible portée sont adaptés à transmettre ladite donnée permettant l'authentification dudit débiteur. Ainsi, si le débiteur saisi une donnée permettant son authentification sur l'entité électronique portable personnelle du créditeur, l'authentification du débiteur peut néanmoins être réalisée dans l'entité électronique portable personnelle du débiteur pour sécuriser la transaction.

Selon un mode de réalisation particulier, le dispositif comprend en outre des moyens de mémorisation dans lesquels est stockée au moins une information complémentaire telle qu'une référence d'un compte à créditer ou une référence dudit créditeur, lesdits moyens pour créer un message de transaction étant adaptés à ajouter ladite au moins une information complémentaire audit message de transaction. Le message de transaction peut ainsi comprendre une référence pour permettre à un système informatique d'un tiers d'effectuer une opération de crédit correspondant à la transaction.

Le dispositif comprend en outre des moyens pour ajouter au moins une information d'authentification audit message de transaction, ladite au moins une information d'authentification permettant à un destinataire dudit message de transaction d'authentifier au moins une partie dudit message de transaction. Une telle information d'authentification permet d'authentifier ladite au moins une donnée, ledit débiteur et/ou ledit créditeur.

Lesdits moyens pour ajouter au moins une information d'authentification comprennent des moyens cryptographiques pour signer au moins une partie dudit message de transaction.

Le dispositif comprend en outre des moyens cryptographiques adaptés à chiffrer au moins une partie dudit message de transaction pour sécuriser la transaction.

Selon un mode de réalisation particulier, lesdits moyens pour transmettre ledit message de transaction sont adaptés à transmettre de façon différée ledit message de transaction. Une transaction faisant intervenir un système informatique d'un tiers peut ainsi être initiée en l'absence d'une connexion à ce système informatique.

Le dispositif comprend en outre, de préférence, des moyens pour recevoir un message de confirmation de transaction. Ainsi, lorsque la transaction fait intervenir un système informatique d'un tiers, il est possible de vérifier que la transaction a été correctement effectuée. Le dispositif comprend avantageusement des moyens de mémorisation pour stocker au moins un message reçu de confirmation de transaction afin de conserver un historique des transactions.

Toujours selon un mode de réalisation particulier, lesdits moyens de communication sans fil à faible portée sont adaptés à transmettre ledit message de confirmation de transaction. Il est ainsi possible de transmettre le message de confirmation de transaction à l'entité électronique portable personnelle du débiteur.

Selon un mode de réalisation particulier, le dispositif comprend en outre des moyens pour mémoriser au moins un premier nombre et des moyens pour soustraire ou additionner au moins un second nombre audit premier nombre, selon ladite au moins une données. La transaction peut ainsi être effectuée directement entre des entités électroniques portables personnelles, sans avoir recours à un système informatique d'un tiers.

Le dispositif comprend en outre des moyens adaptés à établir un canal de communication sécurisé entre lesdits moyens de communication sans fil à faible portée et des moyens équivalents d'un autre dispositif électronique portable pour sécuriser la transaction.

Le dispositif comprend en outre des moyens de téléphonie mobile et/ou des moyens d'accès à un réseau de communication de données permettant la transmission d'une requête de transaction à un système informatique d'un tiers.

Le dispositif selon l'invention permet ainsi de combiner un échange local d'information et un échange d'information via un réseau de téléphonie mobile ou de données pour simplifier et sécuriser une transaction.

De façon avantageuse, le dispositif comprend en outre des moyens pour indiquer l'état de ladite transaction. Le dispositif selon l'invention permet ainsi, en particulier, de déterminer si les dispositifs du débiteur et du créditeur doivent être à proximité l'un de l'autre.

Lesdits moyens de communication sans fil à faible portée sont, par exemple, conformes à la norme NFC. Ils peuvent être intégrés dans une carte à microcircuit.

Ledit montant en valeurs est, par exemple, une valeur monétaire, un nombre de points de fidélité, un bon d'achat ou d'abonnement, un nombre de points de jeux, un nombre d'unités téléphoniques ou des droits de restitution d'enregistrements numériques.

L'invention a aussi pour objet un téléphone mobile comprenant le dispositif tel que décrit précédemment.

L'invention a également pour objet un procédé pour la transmission d'un montant en valeurs entre un débiteur et un créditeur chacun pourvu d'une entité électronique portable personnelle comprenant des moyens de communication sans fil à faible portée, ce procédé comprenant les étapes suivantes,
- réception d'au moins une information d'authentification dudit débiteur via lesdits moyens de communication sans fil à faible portée ;
- réception d'au moins une donnée liée audit montant en valeurs ;
- création d'un message de transaction comprenant au moins ladite au moins une donnée ; et,
- transmission dudit message de transaction.

Le procédé selon l'invention permet ainsi de réaliser simplement une transaction de façon sécurisée à l'aide d'une entité électronique portable personnelle telle qu'un téléphone mobile, sans avoir recours à un dispositif spécifique tel qu'un terminal de paiement ni à un environnement particulier.

Ladite au moins une donnée liée audit montant en valeurs est reçue via lesdits moyens de communication sans fil à faible portée. Le procédé selon l'invention peut ainsi permettre à un débiteur de saisir ou de valider le montant de la transaction sur son entité électronique portable personnelle.

Le procédé comprend en outre une étape d'acquisition d'au moins une donnée permettant l'authentification dudit débiteur. Le débiteur peut ainsi utiliser, par exemple, un code personnel d'identification pour s'authentifier. D'autres données telles qu'une empreinte digitale peuvent également être utilisées.

Le procédé comprend en outre une étape d'ajout d'une information relative audit débiteur dans ledit message de transaction. Le message de transaction comprend une référence au débiteur pour permettre à un système informatique d'un tiers d'effectuer une opération de débit correspondant à la transaction.

Le procédé comprend en outre une étape d'ajout d'une information complémentaire relative audit créditeur dans ledit message de transaction. Le message de transaction comprend une référence au créditeur pour permettre à un système informatique d'un tiers d'effectuer une opération de crédit correspondant à la transaction.

Le procédé comprend en outre une étape pour ajouter au moins une information d'authentification audit message de transaction, ladite au moins une information d'authentification permettant à un destinataire dudit message de transaction d'authentifier au moins une partie dudit message de transaction. Il est ainsi possible d'authentifier ladite au moins une donnée, ledit débiteur et/ou ledit créditeur. Ladite étape pour ajouter au moins une information d'authentification comprend une étape pour signer au moins une partie dudit message de transaction.

Le procédé comprend en outre une étape de chiffrement d'au moins une partie dudit message de transaction pour sécuriser la transaction.

Le procédé comprend une étape d'établissement d'un canal de communication sécurisé entre lesdits moyens de communication sans fil à faible portée desdites entités électroniques portables personnelles afin de sécuriser la transaction.

Le procédé est avantageusement mis en œuvre dans l'entité électronique portable personnelle dudit créditeur.

De façon avantageuse, le procédé comprend en outre une étape de rapprochement desdites entités électroniques portables personnelles pour sécuriser la transaction.

Ledit message de transaction est transmis par un réseau mobile de communication ou par un réseau de communication de données, par exemple via une connexion établie entre ladite entité électronique portable personnelle dudit créditeur et un système informatique d'un tiers.

Le procédé selon l'invention permet ainsi de combiner un échange local d'information et un échange d'information via un réseau de téléphonie mobile ou de données pour simplifier et sécuriser une transaction.

Selon un mode de réalisation particulier, ledit message de transaction est transmis de façon différée. Une transaction faisant intervenir un système informatique d'un tiers peut ainsi être initiée en l'absence d'une connexion à ce système informatique.

Avantageusement, le procédé comprend en outre une étape de réception d'un message de confirmation de transaction. Ainsi, lorsque la transaction fait intervenir un système informatique d'un tiers, il est possible de vérifier que la transaction a été correctement effectuée. De plus, le procédé comprend, de préférence, une étape de mémorisation dudit message de confirmation de transaction afin de conserver un historique des transactions.

Toujours selon un mode de réalisation particulier, le procédé comprend en outre une étape de retransmission dudit message de confirmation de transaction via lesdits moyens de communication sans fil à faible portée. Il est ainsi possible de transmettre le message de confirmation de transaction à l'entité électronique portable personnelle du débiteur.

Toujours selon un mode de réalisation particulier, le procédé comprend en outre une étape d'addition ou de soustraction de ladite au moins une donnée à un nombre préalablement mémorisé. La transaction peut ainsi être effectuée directement entre des entités électroniques portables personnelles, sans avoir recours à un système informatique d'un tiers.

De façon avantageuse, le procédé comprend en outre une étape pour indiquer l'état de ladite transaction. Le procédé selon l'invention permet ainsi, en particulier, de déterminer si les entités électroniques portables du débiteur et du créditeur doivent être à proximité l'une de l'autre.

Ledit montant en valeurs est par exemple une valeur monétaire, un nombre de points de fidélité, un bon d'achat ou d'abonnement, un nombre de points de jeux, un nombre d'unités téléphoniques ou des droits de restitution d'enregistrements numériques.

Selon un mode de réalisation particulier, ladite entité électronique portable personnelle dudit créditeur est un téléphone mobile. De même, selon un mode de réalisation particulier, ladite entité électronique portable personnelle dudit débiteur est un téléphone mobile ou une carte à microcircuit. Le procédé selon l'invention est ainsi facile à mettre en œuvre et ne nécessite pas de dispositif spécifique tel qu'un terminal de paiement ni un environnement particulier.

L'invention a également pour objet un programme d'ordinateur comprenant des instructions adaptées à la mise en œuvre de chacune des étapes du procédé tel que décrit précédemment.

D'autres avantages, buts et caractéristiques de la présente invention ressortent de la description détaillée qui suit, faite à titre d'exemple non limitatif, au regard des dessins annexés dans lesquels :
- la figure 1 représente schématiquement une entité électronique portable permettant la mise en œuvre de l'invention ;
- la figure 2, comprenant les figures 2a et 2b, illustre un premier exemple d'algorithme pour mettre en œuvre l'invention afin de transférer un montant en valeurs entre un débiteur et un créditeur, muni chacun d'une entité électronique portable ;
- la figure 3 illustre un exemple d'une partie de message pouvant être transmis par l'entité électronique portable du débiteur à celle du créditeur lors de la transaction, avant qu'il ne soit chiffré ;
- la figure 4 illustre un exemple d'une partie de message transmis par l'entité électronique portable du créditeur à celle du débiteur lorsque le créditeur a validé la transaction ou une partie de message transmis à un système informatique d'un établissement bancaire, d'un tiers de confiance ou d'une personne en charge de la gestion des valeurs considérées, sous forme de requête de transaction ; et,
- la figure 5, comprenant les figures 5a, 5b et 5c, illustre un second exemple de mise en œuvre de l'invention afin de transférer un montant en valeurs entre un débiteur et un créditeur, muni chacun d'une entité électronique portable.

L'invention permet à un débiteur de transmettre un montant en valeurs à un créditeur à l'aide d'un téléphone mobile et d'une entité électronique telle qu'un téléphone mobile ou une carte à microcircuit. Ces dispositifs électroniques sont ici pourvus de moyens de communication sans fil à faible portée autorisant, par exemple, une communication à une distance maximale d'un mètre, de cinquante centimètres ou de vingt centimètres.

Le téléphone mobile est également pourvu de moyens de communication pour permettre de transférer une requête de transaction à un système informatique, typiquement un serveur, d'un établissement bancaire, d'un tiers de confiance ou d'une personne en charge de la gestion des valeurs considérées. De tels moyens de communication sont par exemple des moyens de communications téléphoniques, notamment GSM (sigle de *Global System for Mobile Communications* en terminologie anglo-saxonne) ou GPRS (sigle de *General Packet Radio Service* en terminologie anglo-saxonne). Alternativement, ces moyens de communication permettent d'accéder à un réseau de communication de données auquel est relié le système informatique de l'établissement bancaire, du tiers de confiance ou de la personne en charge de la gestion des valeurs considérées, pour transmettre la requête de transaction via le réseau. De tels moyens de communication sont, à titre d'illustration, compatibles avec au moins l'une des normes WiFi.

Les montants en valeurs sont par exemple des valeurs monétaires, des points de fidélité, des bons d'achat ou d'abonnements, des points de jeux, des unités téléphoniques ou des droits de restitution d'enregistrements numériques (audio ou audio et vidéo).

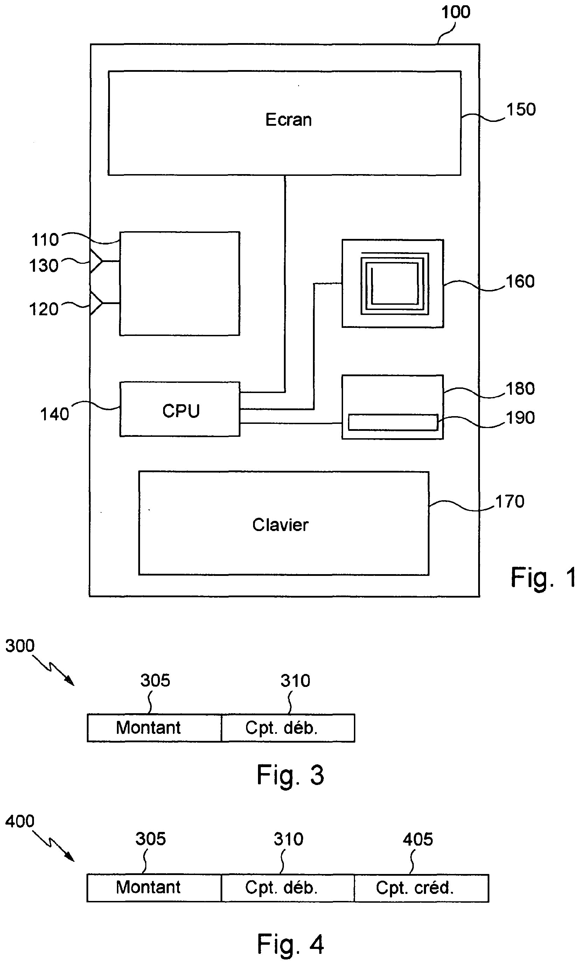

La figure 1 représente un téléphone mobile 100 apte à mettre en œuvre l'invention. Comme illustré, le téléphone mobile 100 comprend un module 110 de téléphonie mobile, avantageusement relié à un haut-parleur 120 et à un microphone 130. Le téléphone mobile 100 comprend également une unité centrale de traitement 140, aussi appelée CPU (sigle de *Central Processing Unit* en terminologie anglo-saxonne) et, de préférence, un écran 150.

Le téléphone mobile 100 comprend en outre un module 160 de communication à faible portée, avantageusement un module de communication sans fil à faible portée. Le module 160 est par exemple du type NFC (sigle de *Near Field Communication* en terminologie anglo-saxonne). Le module 160 peut être directement implanté dans le téléphone mobile 100, par exemple sous forme de circuit intégré et d'antenne, ou inséré dans le téléphone mobile 100, par exemple, sous forme de carte à microcircuit comprenant une antenne intégrée.

Le téléphone mobile comprend également un dispositif de saisie 170, tel qu'un clavier ou un dispositif équivalent, pour saisir des caractères, des montants en valeurs et/ou des commandes. Le dispositif de saisie 170 forme, en coopération avec l'écran 150, une interface utilisateur. Le dispositif de saisie 170 peut également être intégré à l'écran 150 sous forme d'écran tactile.

Le téléphone mobile 100 comprend aussi un module mémoire 180 adapté à mémoriser au moins une application 190 permettant l'échange de montants en valeurs, à l'aide du module 160 de communication sans fil à faible portée, avec une autre entité électronique portable pourvu d'un module de communication compatible avec celui-ci.

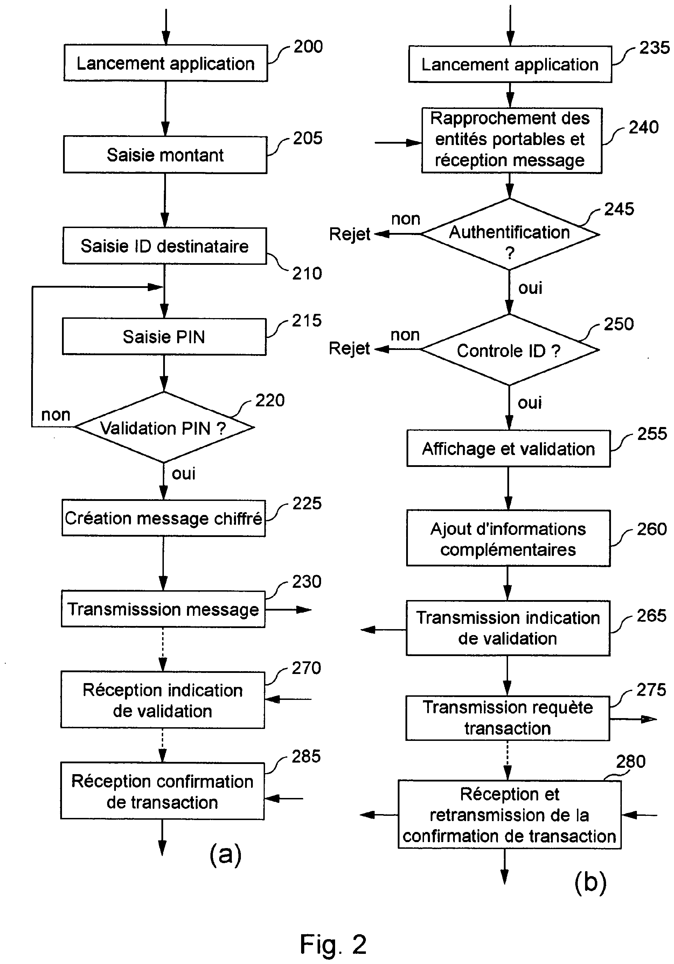

La figure 2, comprenant les figures 2a et 2b, illustre un premier exemple d'algorithme pour mettre en œuvre l'invention afin de transférer un montant en valeurs entre deux personnes, un débiteur et un créditeur, l'un étant muni d'un téléphone mobile, par exemple celui présenté sur la figure 1 et l'autre d'une entité électronique portable pouvant également être un téléphone mobile. Il est ici considéré que le débiteur et le créditeur dispose chacun d'un téléphone mobile tel que celui présenté sur la figure 1. Le débiteur et le créditeur disposent ainsi de téléphones mobiles 100 et 100', respectivement.

Le débiteur est la personne à qui le montant en valeurs est retiré, par exemple le titulaire d'un compte qui est débité, tandis que le créditeur est la personne qui reçoit le montant en valeur, par exemple le titulaire d'un compte qui est crédité.

La figure 2a représente l'algorithme mis en œuvre sur le téléphone mobile du débiteur tandis que la figure 2b représente l'algorithme mis en œuvre sur le téléphone mobile du créditeur. Ces algorithmes sont de préférence intégrés partiellement dans un module sécurisé (authentification et ajout d'informations permettant l'authentification) et partiellement dans une même application, par exemple les applications 190 et 190', pouvant être utilisée pour des opérations de débit et de crédit (interface utilisateur).

Tout d'abord, le débiteur doit lancer l'application permettant de transférer un montant en valeurs (étape 200). Cette application est par exemple l'application 190 représentée sur la figure 1. L'utilisateur peut ensuite saisir un montant en valeurs (étape 205) à l'aide du dispositif de saisie 170. Ce montant peut être affiché sur l'écran 150 avant qu'il ne soit validé.

Lorsque l'utilisateur a validé ce montant, il peut être invité à entrer un identifiant du créditeur (étape 210), en particulier si un canal de communication sécurisé n'a pas été établi entre les entités électroniques portables du débiteur et du créditeur. L'identifiant du créditeur est de préférence court, tel que des initiales. Il peut être représenté, par exemple, sur six octets. A nouveau, l'identifiant du créditeur peut être affiché avant qu'il ne soit validé. Cet identifiant est, par exemple, donné oralement par le créditeur.

L'utilisateur est ensuite invité à entrer une indication permettant son authentification telle qu'un numéro d'identification personnel (étape 215), aussi appelé code confidentiel ou code PIN (acronyme de *Personnal Identification Number* en terminologie anglo-saxonne). Ce code n'est, de préférence, pas affiché ou est avantageusement au moins partiellement masqué afin qu'il ne soit pas visualisable par une personne malveillante.

Lorsque le code confidentiel a été validé, par l'utilisateur ou automatiquement s'il répond à des règles prédéterminées, un test est effectué pour authentifier l'utilisateur (étape 220). Pour cela, le code confidentiel peut être transmis à un module d'authentification qui peut être implanté, par exemple, dans le module 160 de communication sans fil à faible portée. Le module d'authentification compare le code entré par l'utilisateur avec un code préalablement enregistré. Si le code confidentiel entré par l'utilisateur ne correspond pas au code préalablement enregistré, l'utilisateur est invité à entrer le code confidentiel à nouveau. Le nombre de tentative pour entrer le code confidentiel peut être limité, par exemple à 3 essais. Alternativement, ou de façon complémentaire, un temps de pause peut être introduit entre chaque tentative, le temps de pause augmentant entre chaque tentative.

Si le code confidentiel est correct, le module d'authentification adresse un accusé réception à l'application 190 permettant de transférer un montant en valeurs qui, de préférence, affiche une indication d'authentification sur l'écran 150 pour prévenir que la transaction peut être effectuée.

Un message est créé (étape 225). Le message comprend notamment le montant en valeurs saisi par l'utilisateur. Le message comprend également des indications relatives à l'identification débiteur et du compte devant être débité. La figure 3 illustre un exemple des informations contenues dans un tel message. Ce message peut être créé par l'application 190.

Il convient de noter ici que le message comprend une indication relative à l'identité du créditeur, telle que ses initiales. Cependant, selon un mode de réalisation avantageux, la transaction est précédée par un échange d'informations préliminaires, par l'interface de communication sans fil à faible portée, entre les deux téléphones mobiles afin de mettre en place un canal de communication sécurisé. Cet échange d'informations préliminaires est également utilisé pour la transmission d'une ou de plusieurs clés cryptographiques temporaires, utilisées pour chiffrer et déchiffrer les données échangées.

La communication établie entre les téléphones mobiles est de préférence sécurisée à l'aide d'un module de sécurisation comprenant des moyens cryptographiques connus de l'homme du métier, typiquement des moyens pour chiffrer, déchiffrer, signer et vérifier une signature et des moyens pour mémoriser une ou plusieurs clés cryptographiques.

Comme indiqué précédemment, un canal de communication sécurisé est de préférence établi entre les deux téléphones mobiles. La communication par l'interface de communication sans fil à faible portée étant alors sécurisée par l'usage de clés temporaires, il n'est pas toujours nécessaire de chiffrer spécifiquement le message à l'aide d'une autre clé.

Au moins une partie du message est de préférence chiffrés et/ou signés. L'indication relative au créditeur est chiffrée et signée pour permettre au créditeur d'authentifier le message tandis que les informations relatives au montant et au numéro de compte du débiteur sont chiffrées et signées pour permettre au serveur en charge d'effectuer la transaction d'authentifier le message pour vérifier qu'il a bien été soumis par le débiteur. Deux clés différentes sont utilisées.

Un module de sécurisation comprenant des moyens cryptographiques pour chiffrer, déchiffrer, signer et vérifier une signature peut être implanté, par exemple, dans le module 160 de communication sans fil à faible portée. Le module de sécurisation comprend de préférence un microcontrôleur sécurisé, certifié selon les critères communs ou conforme aux exigences FIPS (acronyme de *Federal Information Processing Standards* en terminologie anglo-saxonne). Ce module est utilisé pour chiffrer et déchiffrer toutes les données transitant par le canal de communication sécurisé ou, plus spécifiquement, le message. Le message est alors transmis au module 160 de communication sans fil à faible portée pour y être chiffré. Les moyens de chiffrement sont par exemple basés sur des algorithmes standard tels que les algorithmes DES (sigle de *Data Encryption Standard* en terminologie anglo-saxonne), AES (sigle de *Advanced Encryption Standard* en terminologie anglo-saxonne) et RSA (initiales des auteurs de cet algorithme : Rivest, Shamir et Adleman), et une clé mémorisée. Le module de sécurisation peut également être implanté ailleurs, par exemple dans une carte SIM (acronyme de *Subscriber Identity Module* en terminologie anglo-saxonne) insérée dans l'entité électronique portable ou dans l'application 190.

Naturellement, il existe d'autres systèmes pour sécuriser la transaction et authentifier l'auteur du message.

Le message chiffré est ensuite transmis au créditeur (étape 230) par le module 160 de communication sans fil à faible portée.

Si les téléphones mobiles du débiteur et du créditeur ne sont pas proches l'un de l'autre, ils doivent être approchés pour être à proximité l'un de l'autre, par exemple à une distance inférieure à 20 centimètres ou à 50 centimètres. La distance minimale relative entre les téléphones mobiles est déterminée par la portée des moyens de communication sans fil à faible portée. Cette étape de rapprochement des téléphones mobiles contribue à la sécurité du système en limitant le risque que les informations échangées ne soient interceptées et utilisées par un tiers.

De son côté, le créditeur, lorsqu'il s'est mis d'accord avec le débiteur, lance l'application, référencée 190', permettant de transférer un montant en valeurs (étape 235). Alternativement, l'application 190' peut être lancée automatiquement après réception du message, lorsque le message reçu a été identifié comme un message de transaction.

Lorsque le téléphone mobile 100' du créditeur reçoit le message chiffré émis par le débiteur (étape 240) à l'aide son module 160' de communication sans fil à faible portée, une étape d'authentification (étape 245) est mise en œuvre. Cette étape d'authentification, basée, par exemple, sur l'utilisation d'une clé publique, a pour objet de contrôler l'origine du message reçu. L'authentification est, de préférence, réalisée par un module de sécurisation implanté, par exemple, dans le module 160'.

Si le message n'est pas authentifié, il est rejeté.

Si le message est authentifié et si le message n'est pas reçu par un canal de communication sécurisé, un test est effectué pour déterminer si l'utilisateur du téléphone mobile 100' est le destinataire du transfert (étape 250), c'est-à-dire si l'utilisateur de ce téléphone mobile est le créditeur. A cette fin, les indications relatives à l'identité du créditeur contenues dans le message reçu sont comparées aux indications relatives à l'identité du créditeur préalablement mémorisées dans le téléphone mobile 100', par exemple dans le module de sécurisation qui peut être implanté dans le module 160' de communication sans fil à faible portée. Ce test permet de sécuriser le transfert et de réduire le risque, faible (la portée de communication est limitée), que le message ne soit intercepté par un autre téléphone mobile.

Si l'utilisateur n'est pas le destinataire du transfert, le message est rejeté.

Si l'utilisateur est le destinataire du transfert, le message reçu est transféré à l'application 190'. Si une partie du message est confidentielle, seule la partie non confidentielle est, de préférence, transmise à l'application 190' qui n'est pas nécessairement sécurisée. Certaines informations contenues dans le message sont alors, de préférence, affichées sur l'écran 150' pour permettre au créditeur de valider la transaction (étape 255). Les informations affichées sont, par exemple, le montant et des indications relatives à l'identité du débiteur.

L'utilisateur peut utiliser le dispositif de saisie 170' pour valider ou non la transaction. Si l'utilisateur ne valide pas la transaction, le message est rejeté. Au contraire, si l'utilisateur valide la transaction, des informations complémentaires sont ajoutées au message reçu (étape 260). Comme illustré sur la figure 4, ces informations complémentaires sont par exemple des données relatives à l'identité du créditeur et au compte devant être crédité. Ces informations complémentaires, de préférence chiffrées dans le message, peuvent être ajoutées, sur requête de l'application 190', par le module de sécurisation. Cette requête pour ajouter les informations complémentaires est ainsi, de préférence, transmise, avec une indication de validation, au module 160' comprenant, par exemple, le module de sécurisation. Le module 160' de communication sans fil à faible portée transmet (étape 265), à son tour, une indication de validation au module 160 de communication sans fil à faible portée du téléphone mobile du débiteur. L'indication de validation transmise du téléphone mobile du créditeur à celui du débiteur comporte avantageusement les informations complémentaires ajoutées au message.

L'indication de validation reçue par le module 160 de communication sans fil à faible portée du téléphone mobile du débiteur peut être mémorisée par ce module ou dans le module mémoire 180 (étape 270). L'indication de validation peut être affichée sur l'écran 150.

Une requête de transaction est alors émise par le téléphone mobile du créditeur au système informatique de l'établissement bancaire, du tiers de confiance ou de la personne en charge de la gestion des valeurs considérées (étape 275). Cette requête est ici transmise par le réseau de téléphonie mobile.

La requête de transaction peut contenir des informations permettant d'authentifier la requête, notamment des informations d'authentification ajoutées par les modules 160 et/ou 160' à l'aide de clés cryptographiques mémorisées dans ces modules (ces clés cryptographiques sont différentes des clés temporaires utilisées pour sécuriser la communication entre les deux entités électroniques portables). La requête de transaction est ainsi, avantageusement, similaire à l'indication de validation transmise du téléphone mobile du créditeur à celui du débiteur, éventuellement chiffrée avec une clé différente, permettant l'authentification par un tiers de confiance.

Alternativement, la requête de transaction peut être émise par le téléphone mobile du débiteur en prenant en compte les informations complémentaires reçues avec l'indication de validation.

La requête de transaction peut également être transmise par un réseau de communication de données tel qu'Internet.

Si la requête de transaction n'est pas rejetée par le système informatique de l'établissement bancaire, du tiers de confiance ou de la personne en charge de la gestion des valeurs considérées, par exemple, si le compte n'est pas suffisamment crédité, la transaction est effectuée, de façon standard, par le système informatique de l'établissement bancaire, du tiers de confiance ou de la personne en charge de la gestion des valeurs considérées. Un message de confirmation de la transaction est de préférence adressé aux téléphones mobiles du débiteur et du créditeur lorsque la transaction a été effectuée (étapes 280 et 285) ou, préférentiellement, au téléphone mobile du seul émetteur de la requête de la transaction. Dans ce cas, le téléphone mobile de l'émetteur de la requête de la transaction transmet avantageusement à l'autre téléphone mobile le message de confirmation ou de rejet de la transaction.

Les confirmations de transaction sont mémorisées dans chaque téléphone mobile, de préférence dans une mémoire non volatile, à des fins d'archivage.

Alternativement, la transaction peut être initiée par le créditeur qui transmet un message comprenant les références du compte à créditer au débiteur, celui-ci adressant un message de validation de la transaction au débiteur, avec d'éventuelles informations complémentaires le concernant.

Il convient de remarquer ici que le module 160 de communication sans fil à faible portée peut se présenter sous forme d'une carte à microcircuit. Ce module est, par exemple, un porte-monnaie électronique. Alternativement, le module 160 de communication sans fil à faible portée peut être intégré à l'unité centrale de traitement 140 formant alors un seul circuit intégré. Il peut s'agir également d'un circuit intégré comprenant l'antenne, ou non, monté dans le corps de l'entité électronique portable. L'antenne peut être intégrée au circuit ou à un autre composant de l'entité électronique portable.

Par ailleurs, la connexion au système informatique de l'établissement bancaire, du tiers de confiance ou de la personne en charge de la gestion des valeurs considérées et la communication de la requête de transaction peut être effectuée au cours de la transaction ou peut être différée dans le temps. Cette communication est de préférence sécurisée. En particulier, la requête de transaction reçue par le système informatique de l'établissement bancaire, du tiers de confiance ou de la personne en charge de la gestion des valeurs considérées est avantageusement authentifiée.

Si les valeurs sont mémorisées et mises à jours directement dans les téléphones mobiles, il n'est pas nécessaire d'effectuer une connexion à un système informatique de l'établissement bancaire, du tiers de confiance ou de la personne en charge de la gestion des valeurs considérées. Par exemple, si les modules 160 et 160' de communication sans fil à faible portée sont des porte-monnaie électroniques et si les applications 190 et 190' disposent des fonctions permettant de diminuer et d'augmenter les valeurs mémorisées, l'établissement d'une connexion n'est pas requis. De même, si les valeurs considérées sont du type points de fidélité, si elles sont mémorisées directement dans les téléphones mobiles et si les modules de sécurisation, ou alternativement les applications 190 et 190', disposent des fonctions permettant de diminuer et d'augmenter les valeurs mémorisées, il n'est pas nécessaire d'établir une connexion.

La figure 3 illustre un exemple d'une partie de message pouvant être transmis par le téléphone mobile du débiteur à celui du créditeur, lors de la transaction, avant qu'il ne soit chiffré (étapes 225 et 230 de la figure 2). Comme illustré, le message 300 comprend ici un premier champ 305 correspondant au montant de la transaction et un second champ 310 correspondant à la référence du compte à débiter ou à un identifiant du débiteur permettant de retrouver ces références. Le message 300 peut également comprendre un troisième champ correspondant à l'identifiant du créditeur, par exemple ses initiales. Comme indiqué précédemment, le message 300 est de préférence chiffré avant d'être transmis. Certaines données du message telles que la signature et les clés ne sont pas représentées sur la figure 3.

La figure 4 illustre un exemple d'une partie de message transmis par le téléphone mobile du créditeur à celui du débiteur lorsque le créditeur a validé la transaction (étape 265 de la figure 2) ou d'une partie de message transmis à un système informatique d'un établissement bancaire, d'un tiers de confiance ou d'une personne en charge de la gestion des valeurs considérées, sous forme de requête de transaction.

Comme illustré, le message 400 comprend les champs 305 et 310 décrits précédemment, relatifs au montant de la transaction et au compte à débiter ou à l'identification du débiteur. Le message 400 comprend en outre un champ 405 correspondant à la référence du compte à créditer ou à des indications relatives au créditeur permettant de retrouver cette référence. Certaines données du message telles que la signature et les clés ne sont pas représentées sur la figure 4. Le message 400 est de préférence chiffré avant d'être transmis.

Il convient de remarquer que si le créditeur peut lire le message 300 et ajouter des informations relatives au compte à créditer, le créditeur ne peut pas modifier les champs 305 et 310 concernant le montant de la transaction et les références du compte à débiter en raison de la sécurisation utilisée.

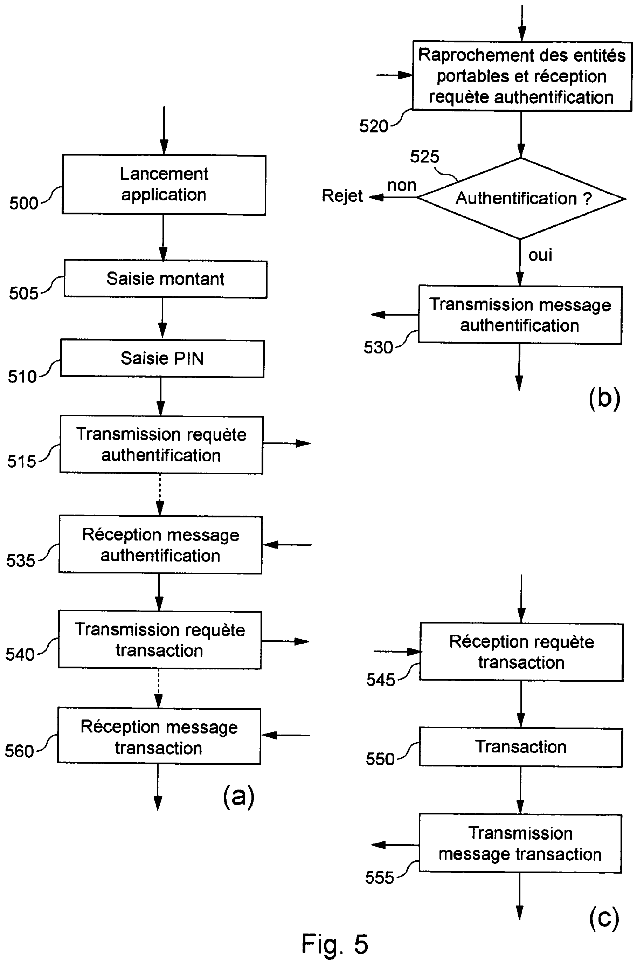

La figure 5, comprenant les figures 5a, 5b et 5c, illustre un second exemple de mise en œuvre de l'invention pour transférer un montant en valeurs entre un débiteur et un créditeur, l'un étant muni d'un téléphone mobile et l'autre d'une entité électronique portable pouvant être un téléphone mobile. Il est ici considéré que le créditeur dispose d'un téléphone mobile tel que celui présenté sur la figure 1 et que le débiteur dispose d'une simple carte à microcircuit comprenant des moyens de communication sans fil à faible portée et des moyens d'authentification tels que des moyens cryptographiques d'authentification.

La figure 5a représente l'algorithme mis en œuvre sur le téléphone mobile du créditeur, la figure 5b représente l'algorithme mis en œuvre sur la carte à microcircuit du débiteur et la figure 5c représente l'algorithme mis en œuvre par l'établissement bancaire, le tiers de confiance ou la personne en charge de la gestion des valeurs considérées.

Après avoir lancé l'application 190 de transfert de valeurs (étape 500), le créditeur saisit un montant en valeurs (étape 505), de préférence à l'aide du dispositif de saisie 170. Le montant peut être affiché sur l'écran 150.

Le débiteur est ensuite invité à entrer son code confidentiel sur le téléphone mobile du créditeur (étape 510). Le code confidentiel est avantageusement saisi à l'aide du dispositif de saisie 170. Il n'est, de préférence, pas affiché sur l'écran 150.

Une requête d'authentification est alors formée par l'application 190, contenant le code confidentiel et transmis au module 160 de communication sans fil à faible portée. A son tour, le module 160 transmet la requête d'authentification à la carte à microcircuit du débiteur.

Le téléphone mobile du créditeur et la carte à microcircuit du débiteur sont rapprochés pour permettre une transmission de données entre eux, à l'aide des moyens de communication sans fil à faible portée.

De façon avantageuse, un canal de communication sécurisé est établi entre le téléphone mobile du créditeur et la carte à microcircuit du débiteur à l'aide de clés temporaires de cryptage. Ces clés temporaires sont mémorisées, par exemple, dans des modules de sécurisation qui peuvent être implantés dans les modules de communication sans fil à faible portée.

Alternativement, la requête d'authentification peut être chiffrée avant d'être transmise à la carte à microcircuit du débiteur.

Après avoir reçu la requête d'authentification (étape 520), la carte à microcircuit de débiteur authentifie le code confidentiel contenu dans la requête en le comparant, par exemple, avec un code confidentiel préalablement mémorisé dans la carte à microcircuit du débiteur (étape 525).

Si le code confidentiel n'est pas validé, la requête d'authentification est rejetée. Si, au contraire, le code confidentiel est validé, la carte à microcircuit du débiteur créée, en réponse à cette requête, un message d'authentification qui est transmis (étape 530) au téléphone mobile du créditeur, c'est-à-dire, ici, au module 160.

Le message d'authentification comprend des premières informations permettant l'authentification de ce message par le créditeur et des secondes informations permettant l'authentification de ce message par un tiers, par exemple par un système informatique d'un établissement bancaire. Ces informations permettant l'authentification peuvent être une signature. Le message d'authentification est au moins partiellement chiffré.

Le message d'authentification comprend sous forme chiffrée, des références du débiteur permettant à un système informatique d'un établissement bancaire, d'un tiers de confiance ou d'une personne en charge de la gestion des valeurs considérées, de débiter un compte.

Après la réception du message d'authentification (étape 535), le module 160 transmet le message d'authentification à l'application 190. L'application forme alors une requête de transaction comprenant le message d'authentification, le montant préalablement saisi et des références du créditeur tel que son numéro de compte.

La requête de transaction comprend des informations permettant l'authentification du débiteur, du montant de la transaction et/ou du créditeur. La requête de transaction peut comprendre une partie du message d'authentification reçu de l'entité électronique portable du débiteur.

La requête de transaction est au moins partiellement chiffrée à l'aide de moyens cryptographiques.

La requête de transaction est ensuite transmise (étape 540) par le téléphone mobile du créditeur à un système informatique de l'établissement bancaire, du tiers de confiance ou de la personne en charge de la gestion des valeurs considérées. La requête de transaction est ici transmise par le réseau de téléphonie mobile.

Lorsque la requête de transaction est reçue (étape 545) par un système informatique de l'établissement bancaire, du tiers de confiance ou de la personne en charge de la gestion des valeurs considérées, celui-ci, ou celle-ci, authentifie la requête de transaction. Si la requête de transaction n'est pas authentifiée, elle est rejetée. De même, si la transaction ne peut pas être effectuée, par exemple si le compte du débiteur n'est pas suffisamment crédité, la requête de transaction est rejetée. Si la requête de transaction n'est pas rejetée, le montant en valeurs est transféré (étape 550) de façon standard. Un message de confirmation ou de rejet de la transaction est alors avantageusement transmis par le système informatique de l'établissement bancaire, du tiers de confiance ou de la personne en charge de la gestion des valeurs considérées (étape 555) au téléphone mobile du créditeur lorsque la transaction a été effectuée ou rejetée.

A la réception de cette confirmation ou de ce rejet (étape 560), une indication est affichée sur l'écran 150 pour indiquer que la transaction a été effectuée ou rejetée. Cette confirmation peut être retransmise à la carte à microcircuit du débiteur où elle peut être mémorisée.

Le message de confirmation peut prendre la forme d'un SMS (sigle de *Short Message Service* en terminologie anglo-saxonne), le numéro de téléphone du créditeur étant transmis avec la requête de transaction ou étant mémorisé par un système informatique de l'établissement bancaire, du tiers de confiance ou de la personne en charge de la gestion des valeurs considérées en relation avec les références du compte à créditer.

Alternativement, la requête et le message de transaction peuvent être transmis par un réseau de communication de données, par exemple Internet, auquel sont reliés le téléphone mobile du créditeur et un système informatique de l'établissement bancaire, du tiers de confiance ou de la personne en charge de la gestion des valeurs considérées. Le téléphone mobile du créditeur peut être relié à ce réseau selon, par exemple, l'une des normes WiFi.

Si l'accord du débiteur peut être validé par la saisie d'un code confidentiel et la comparaison du code saisie avec un code préalablement mémorisé, cet accord peut être validé selon d'autres techniques. En particulier, l'accord du débiteur peut être validé par des moyens biométriques tels qu'une comparaison d'empreinte digitale. Dans ce cas, l'entité électronique portable du débiteur doit être pourvue de moyens permettant la saisie de ces informations, par exemple un lecteur d'empreinte digitale.

Selon un autre mode de réalisation, un message de transaction est tout d'abord transmis par le créditeur au débiteur. Le téléphone mobile du créditeur et l'entité électronique portable du débiteur, chacun pourvu de moyens de communication sans fil à faible portée, disposent ici chacun d'une mémoire, de préférence sécurisée, permettant de stocker un solde en valeurs duquel le montant en valeurs de la transaction peut être débité et crédité. Alternativement, seul le téléphone mobile du créditeur ou l'entité électronique portable du débiteur dispose d'un tel solde, la transaction étant alors partiellement exécutée par un système informatique d'un tiers.

Le téléphone mobile du créditeur transmet à l'entité électronique portable du débiteur, via les moyens de communication sans fil à faible portée, un message de transaction sécurisé comprenant le montant en valeurs de la transaction. Le message est sécurisé selon une clé cryptographique pouvant être utilisée par un grand nombre de porteurs d'entité électronique portable.

Si le téléphone mobile du débiteur n'est pas à proximité de l'entité électronique portable du débiteur, le téléphone mobile du débiteur et l'entité électronique portable du débiteur doivent être rapprochés l'un de l'autre.

De façon avantageuse, l'entité électronique portable du débiteur dispose d'un bouton d'activation permettant d'activer la réception de messages de transaction via les moyens de communication sans fil à faible portée. Le débiteur contrôle ainsi la réception des messages de transaction pour éviter un débit à son insu. Dans un mode de réalisation particulier, ce bouton d'activation active les moyens de communication sans fil à faible portée.

Le message de transaction est authentifié par l'entité électronique portable du débiteur afin de vérifier que le créditeur est autorisé à lui émettre un tel message de transaction.

Après avoir authentifié le message de transaction, l'entité électronique portable du débiteur débite le solde en valeurs mémorisé du montant en valeurs de la transaction. Ensuite, l'entité électronique portable du débiteur transmet, via les moyens de communication sans fil à faible portée, un message sécurisé au téléphone mobile de créditeur. Le message sécurisé comprend de préférence le montant en valeurs de la transaction.

A nouveau, si le téléphone mobile du créditeur n'est pas à proximité de l'entité électronique portable du débiteur, le téléphone mobile du créditeur et l'entité électronique portable du débiteur doivent être rapprochés l'un de l'autre.

A la réception du message sécurisé, le téléphone mobile du créditeur authentifie ce message. Si le message est authentifié, le solde en valeurs mémorisé est crédité.

Si le téléphone mobile du créditeur ou l'entité électronique portable du débiteur ne dispose pas de mémoire pour stocker un solde en valeur, il transmet une requête de transaction correspondante à un système informatique d'un tiers pour effectuer cette opération.

De façon avantageuse, lorsqu'un échange de données entre les entités électroniques portables est mis en œuvre pour procéder à la transaction, par exemple selon le dernier mode de réalisation décrit, l'entité électronique portable du créditeur et/ou celle du débiteur disposent de moyens pour indiquer à l'utilisateur qu'une transaction est en cours et/ou qu'elle est terminée.

En effet, selon le dernier mode de réalisation décrit, en cas de coupure de la communication après la transmission du message de transaction et avant la réception du message sécurisé, l'entité électronique portable du débiteur peut être débitée tandis que le téléphone mobile du créditeur ne sera pas crédité.

A titre d'illustration, le téléphone mobile du créditeur émet un premier signal sonore lorsqu'un message de transaction est transmis et émet un second signal sonore, de préférence différent du premier, lorsqu'un message sécurisé est reçu. Alternativement, ou de façon complémentaire, une indication visuelle de transaction peut être affichée sur l'écran de l'entité électronique portable pour indiquer que la transaction est en cours ou terminée.

Dans un mode de réalisation particulier, le téléphone mobile du créditeur utilise un indicateur interne d'état. Selon ce mode de réalisation, le téléphone mobile du créditeur active un indicateur interne d'état lorsque le message de transaction est émis. Cet indicateur interne d'état est désactivé à la réception du message sécurisé correspondant au message de transaction.

Plusieurs indicateurs internes d'état peuvent être utilisés lorsque le créditeur procède à plusieurs transactions dans un bref intervalle de temps.

Si après un temps prédéterminé, l'indicateur interne d'état est toujours activé, la transaction doit être annulée auprès de l'entité électronique portable de débiteur ou le message sécurisé doit être réémis. A cette fin, le téléphone mobile du créditeur peut envoyer un message d'annulation de transaction ou un message de réémission du message sécurisé.

## Revendications

1. Procédé pour la transmission d'un montant en valeurs entre un débiteur et un créditeur chacun pourvu d'une entité électronique portable personnelle comprenant des moyens de communication sans fil à faible portée, ledit montant en valeurs étant transféré d'un compte dudit débiteur à un compte dudit créditeur par un système informatique en charge de la gestion des valeurs considérées, ce procédé étant **caractérisé en ce qu'**il comprend les étapes suivantes,
- saisie (210), sur ladite entité électronique portable dudit débiteur, d'un identifiant dudit créditeur ;
- réception (240, 535) par ladite entité électronique portable dudit créditeur d'au moins une information d'authentification dudit débiteur, ladite au moins une information d'authentification étant reçue de ladite entité électronique portable dudit débiteur via lesdits moyens de communication sans fil à faible portée, ledit identifiant dudit créditeur étant transmis à ladite entité électronique portable dudit créditeur avec ladite au moins une information d'authentification ;
- réception (240, 505) d'au moins une donnée liée audit montant en valeurs ;
- création par ladite entité électronique portable dudit créditeur d'un message de transaction comprenant au moins ladite au moins une donnée, ladite au moins une information d'authentification et des données relatives à l'identité dudit créditeur et dudit compte à créditer ; et,
- transmission (275, 540) dudit message de transaction audit système informatique en charge de la gestion des valeurs considérées, via un réseau de téléphonie mobile ou un réseau de communication de données, ladite transmission dudit message de transaction étant différée en l'absence d'une connexion audit système informatique,
comprenant en outre une étape de chiffrement, par ladite entité électronique portable dudit débiteur, de ladite au moins une information d'authentification et une étape de chiffrement, par ladite entité électronique portable dudit débiteur, dudit identifiant dudit créditeur, ledit chiffrement de ladite au moins une information d'authentification et le chiffrement dudit identifiant dudit créditeur utilisant des clés différentes.

2. Procédé selon la revendication 1 comprenant en outre une étape de rapprochement desdites entités électroniques portables personnelles.

3. Procédé selon la revendication 1 ou la revendication 2 comprenant en outre une étape de saisie (205), sur ladite entité électronique portable dudit débiteur, de ladite au moins une donnée liée audit montant en valeurs, ladite au moins une donnée liée audit montant en valeurs étant transmise à ladite entité électronique portable dudit créditeur avec ladite au moins une information d'authentification.

4. Procédé selon la revendication 1 ou la revendication 2 comprenant en outre une étape de saisie (505), sur ladite entité électronique portable dudit créditeur, de ladite au moins une donnée liée audit montant en valeurs.

5. Procédé selon la revendication 1 comprenant en outre une étape de réception (280, 560) d'un message de confirmation de transaction et une étape de retransmission (280) dudit message de confirmation de transaction via lesdits moyens de communication sans fil à faible portée.

6. Procédé selon l'une quelconque des revendications précédentes comprenant en outre une étape de saisie (215), sur ladite entité électronique portable dudit débiteur, d'un numéro d'identification personnelle dudit débiteur et une étape de comparaison dudit numéro d'identification personnelle à un code préalablement enregistré, ladite au moins une information d'authentification étant transmise en réponse à ladite comparaison.

7. Procédé selon l'une quelconque des revendications précédentes selon lequel ladite entité électronique portable personnelle dudit débiteur et/ou dudit créditeur est un téléphone mobile.

8. Programme d'ordinateur comprenant des instructions adaptées à la mise en œuvre de chacune des étapes du procédé selon l'une quelconque des revendications précédentes.

## Patentansprüche

1. Verfahren zur Übertragung eines Wertbetrags zwischen einem Schuldner und einem Gläubiger, die jeweils mit einer persönlichen tragbaren elektronischen Einheit ausgestattet sind, die drahtlose Kommunikationsmittel mit geringer Reichweite umfasst, wobei der Wertbetrag von einem Konto des Schuldners auf ein Konto des Gläubigers durch ein Computersystem übertragen wird, das für die Verwaltung der betreffenden Werte zuständig ist, wobei das Verfahren **dadurch gekennzeichnet ist, dass** es die folgenden Schritte umfasst,
- Eingeben (210) einer Kennung des Gläubigers auf der tragbaren elektronischen Einheit des Schuldners;
- Empfangen (240, 535) mindestens einer Authentifizierungsinformation des Schuldners durch die tragbare elektronische Einheit des Gläubigers, wobei die mindestens eine Authentifizierungsinformation von der tragbaren elektronischen Einheit des Schuldners über die drahtlosen Kommunikationsmittel mit geringer Reichweite empfangen wird, wobei die Kennung des Gläubigers zusammen mit der mindestens einen Authentifizierungsinformation an die tragbare elektronische Einheit des Gläubigers übertragen wird;
- Empfangen (240, 505) von mindestens einem Datenelement, das sich auf den Wertbetrag bezieht;
- Erzeugen einer Transaktionsnachricht, die mindestens das mindestens eine Datenelement, die mindestens eine Authentifizierungsinformation und Daten in Bezug auf die Identität des Gläubigers und des Kontos, auf das die Gutschrift erfolgen soll, umfasst, durch die tragbare elektronische Einheit des Gläubigers; und,
- Übertragen (275, 540) der Transaktionsnachricht an das Computersystem, das für die Verwaltung der betreffenden Werte zuständig ist, über ein Mobilfunknetz oder ein Datenkommunikationsnetz, wobei das Übertragen der Transaktionsnachricht bei Fehlen einer Verbindung zu dem Computersystem aufgeschoben wird, ferner umfassend einen Schritt des Verschlüsselns der mindestens einen Authentifizierungsinformation durch die tragbare elektronische Einheit des Schuldners und einen Schritt des Verschlüsselns der Kennung des Gläubigers durch die tragbare elektronische Einheit des Schuldners, wobei das Verschlüsseln der mindestens einen Authentifizierungsinformation und das Verschlüsseln der Kennung des Gläubigers unterschiedliche Schlüssel verwenden.

2. Verfahren nach Anspruch 1, ferner umfassend einen Schritt des Annäherns der persönlichen tragbaren elektronischen Einheiten.

3. Verfahren nach Anspruch 1 oder Anspruch 2, ferner umfassend einen Schritt des Eingebens (205) des mindestens einen Datenelements, das sich auf den Wertbetrag bezieht, auf der tragbaren elektronischen Einheit des Schuldners, wobei das mindestens eine Datenelement, das sich auf den Wertbetrag bezieht, zusammen mit der mindestens einen Authentifizierungsinformation an die tragbare elektronische Einheit des Gläubigers übertragen wird.

4. Verfahren nach Anspruch 1 oder Anspruch 2, ferner umfassend einen Schritt des Eingebens (505) des mindestens einen Datenelements, das sich auf den Wertbetrag bezieht, auf der tragbaren elektronischen Einheit des Gläubigers.

5. Verfahren nach Anspruch 1, ferner umfassend einen Schritt des Empfangens (280, 560) einer Transaktionsbestätigungsnachricht und einen Schritt des erneuten Übertragens (280) der Transaktionsbestätigungsnachricht über die drahtlosen Kommunikationsmittel mit geringer Reichweite.

6. Verfahren nach einem der vorstehenden Ansprüche, ferner umfassend einen Schritt des Eingebens (215) einer persönlichen Identifikationsnummer des Schuldners auf der tragbaren elektronischen Einheit des Schuldners und einen Schritt des Vergleichens der persönlichen Identifikationsnummer mit einem zuvor gespeicherten Code, wobei die mindestens eine Authentifizierungsinformation als Reaktion auf den Vergleich übertragen wird.

7. Verfahren nach einem der vorstehenden Ansprüche, wobei die persönliche tragbare elektronische Einheit des Schuldners und/oder des Gläubigers ein Mobiltelefon ist.

8. Computerprogramm, umfassend Anweisungen, die für die Durchführung jedes einzelnen Schrittes des Verfahrens nach einem der vorstehenden Ansprüche geeignet sind.

## Claims

1. A method for the transmission of an amount of value between a debtor and a creditor each provided with a personal portable electronic entity comprising short-range wireless communication means, said amount of value being transferred from an account of said debtor to an account of said creditor by a computer system in charge of the management of the values in question, this method being **characterized in that** it comprises the following steps,
- entering (210), on said portable electronic entity of said debtor, an identifier of said creditor;
- receiving (240, 535) by said portable electronic entity of said creditor at least one piece of authentication information from said debtor, said at least one piece of authentication information being received from said portable electronic entity of said debtor via said short-range wireless communication means, said identifier of said creditor being transmitted to said portable electronic entity of said creditor with said at least one piece of authentication information;
- receiving (240, 505) at least one piece of data related to said amount of value;
- creating by said portable electronic entity of said creditor, a transaction message comprising at least said at least one piece of data, said at least one piece of authentication information and data relating to the identity of said creditor and said account to be credited; and,
- transmitting (275, 540) said transaction message to said computer system in charge of managing the values in question, via a mobile telephone network or a data communication network, said transmitting of said transaction message being delayed in the absence of a connection to said computer system, further comprising a step of encrypting, by said portable electronic entity of said debtor, said at least one piece of authentication information and a step of encrypting, by said portable electronic entity of said debtor, said identifier of said creditor, said encrypting of said at least one piece of authentication information and the encrypting of said identifier of said creditor using different keys.

2. The method according to claim 1, further comprising a step of reconciling said personal portable electronic entities.

3. The method according to claim 1 or claim 2, further comprising a step of entering (205), on said portable electronic entity of said debtor, said at least one piece of data related to said amount of value, said at least one piece of data related to said amount of value being transmitted to said portable electronic entity of said creditor with said at least one piece of authentication information.

4. The method according to claim 1 or claim 2 further comprising a step of entering (505), on said portable electronic entity of said creditor, said at least one piece of data related to said amount of value.

5. The method according to claim 1, further comprising a step of receiving (280, 560) a transaction confirmation message and a step of retransmitting (280) said transaction confirmation message via said short-range wireless communication means.

6. The method according to any one of the preceding claims, further comprising a step of entering (215), on said portable electronic entity of said debtor, a personal identification number of said debtor and a step of comparing said personal identification number to a previously stored code, said at least one piece of authentication information being transmitted in response to said comparison.

7. The method according to any one of the preceding claims, wherein said personal portable electronic entity of said debtor and/or said creditor is a cell phone.

8. A computer program comprising instructions suitable for implementing each of the steps of the method according to any one of the preceding claims.
